# FASCICULE DE BREVET EUROPEEN

(11) **EP 3 194 195 B1**
(45) Date de publication et mention de la délivrance du brevet: **05.12.2018**
(21) Numéro de dépôt: 15763056.7
(22) Date de dépôt: 26.08.2015
(51) Int. Cl.: B60K 11/04

(54) **ENSEMBLE DE REFROIDISSEMENT POUR UN ORGANE FONCTIONNEL A REFROIDIR COMPRENANT UN RADIATEUR ET UN SUPPORT DE MOTOVENTILATEUR**
KÜHLANORDNUNG FÜR EINE ZU KÜHLENDE EINHEIT, UMFASSEND EINEN KÜHLER UND EINE VENTILATORHALTERUNG
COOLING ASSEMBLY FOR A FUNCTIONAL UNIT TO BE COOLED, COMPRISING A RADIATOR AND A VENTILATOR SUPPORT

(30) Priorité: 16.09.2014 FR 1458721
(43) Date de publication de la demande: 26.07.2017
(73) Titulaire: Renault S.A.S., 92100 Boulogne-Billancourt (FR)
(72) Inventeur: DAVID, Pascal, F-78960 Voisns-le-Bretonneux (FR); BUI, Joseph, F-78130 Les Mureaux (FR)
(86) Numéro de dépôt international: PCT/FR2015/052271
(87) Numéro de publication internationale: WO 2016/042231

(56) Documents cités:
- FR-A1- 2 976 528
- FR-A2- 2 189 697
- US-A- 5 341 871

## Description

La présente invention concerne un ensemble de refroidissement comprenant un radiateur et un support de motoventilateur, ainsi qu'un véhicule automobile équipé d'un tel ensemble.

Les véhicules automobiles comportent généralement un système de refroidissement du moteur thermique disposé à l'avant du véhicule, comprenant un radiateur recevant derrière lui un motoventilateur maintenu par un support fixé à ce radiateur.

Le radiateur reçoit le liquide de refroidissement venant du moteur thermique, pour le refroidir lors de sa traversée. D'autres radiateurs peuvent lui être superposés, notamment pour refroidir l'air comprimé d'un turbocompresseur de suralimentation, ou le fluide du circuit de climatisation.

Le motoventilateur comporte habituellement une hélice fixée directement sur l'extrémité avant de l'arbre du moteur électrique, dont les pales sont disposées juste en arrière du faisceau de tubes du radiateur afin d'obtenir un flux d'air maximum à travers ce faisceau lorsque le moteur électrique est en marche.

Un type de support du motoventilateur connu comporte une partie centrale maintenant le moteur électrique, reliée par quatre bras à quatre points de fixation se trouvant dans les coins du radiateur, aux extrémités supérieures et inférieures des boîtes à eau disposées verticalement, qui encadrent de chaque côté le faisceau des tubes de refroidissement disposés horizontalement.

Les bras supportent de plus une collerette axiale entourant l'hélice du ventilateur afin de guider le flux suivant une veine d'air axiale, pour obtenir le meilleur rendement d'échange thermique.

Les fixations des bras sur le radiateur sont généralement prévues pour se clipser facilement sur ce radiateur, afin de permettre un montage rapide sur la ligne d'assemblage du véhicule, et faciliter les interventions en réparation.

De plus on dispose généralement l'hélice du ventilateur au plus près du faisceau du radiateur afin de réduire l'encombrement axial de l'ensemble de refroidissement, et dégager un espace plus important dans le compartiment moteur.

Pour obtenir un ensemble léger et économique on peut réaliser le support par un moulage en matière plastique, qui donne d'une seule pièce toutes les fonctions intégrées dans ce moulage, notamment les moyens de fixation sur le radiateur.

Toutefois un problème qui se pose dans certains cas est qu'avec les tolérances de fabrication et les jeux de montage, avec la force de réaction poussant le ventilateur vers l'avant quand il pulse l'air vers l'arrière, notamment à son démarrage quand la veine d'air est encore statique, et avec les freinages du véhicule donnant une accélération vers l'avant, on peut obtenir une flexion suffisante des bras du support qui occasionne des contacts entre l'hélice et le faisceau.

On a alors un risque d'endommagement du faisceau, réalisé généralement en aluminium et relativement fragile, qui peut entraîner une obstruction du passage d'air, et un perçage des tubes occasionnant des fuites.

La présente invention a notamment pour but d'éviter ces inconvénients de la technique antérieure.

Elle propose à cet effet un ensemble de refroidissement de fluide pour un organe fonctionnel à refroidir, comprenant d'une part un radiateur présentant des côtés et des boîtes à eau venant sur lesdits côtés, et d'autre part un support comportant une partie centrale de maintien d'un motoventilateur, et des bras s'étendant radialement à partir de ladite partie centrale, lesdits bras présentant des extrémités équipées respectivement de moyen de fixation d'extrémité venant se fixer sur lesdites boîtes à eau ; et il comporte au moins une butée axiale disposée entre au moins un bras et ledit radiateur pour effectuer un calage axial dudit bras par rapport audit radiateur.

L'organe fonctionnel à refroidir peut être un moteur thermique. Cela peut également être un moteur électrique, ou toute autre machine mettant en oeuvre un échangeur thermique.

Un avantage de cet ensemble de refroidissement est qu'avec peu de modification du radiateur ou du support, on peut réaliser facilement et de manière économique un appui d'un ou plusieurs bras sur les boîtes à eau du radiateur, qui est disposé entre le motoventilateur et les points de fixation. Ces appuis limitent la flexion axiale des bras, ce qui permet d'éliminer un risque de contact de l'hélice du ventilateur sur le faisceau du radiateur.

On observera que le nombre de bras du support n'est pas limité à quatre. Il peut en effet comporter aussi deux ou trois bras équipés respectivement de moyens de fixation d'extrémité destinés à coopérer respectivement avec deux ou trois points de fixation.

L'ensemble de refroidissement selon l'invention peut de plus comporter une ou plusieurs des caractéristiques suivantes, qui peuvent être combinées entre elles.

Avantageusement, ladite au moins une butée axiale est située radialement entre l'extrémité dudit au moins un bras et ladite partie centrale, et préférentiellement ladite au moins une butée axiale est située au voisinage de ladite extrémité dudit au moins un bras. Par exemple, ladite au moins une butée axiale prend appui sur les boîtes à eau du radiateur. Ces boîtes à eau constituent des ensembles rigides et peu fragiles qui peuvent supporter la poussée axiale.

En particulier, ladite au moins une butée axiale peut être intégrée dans le moulage des boîtes à eau, ou dans celui des bras du support. On a alors une solution économique, qui ne nécessite pas de manipulation de ces butées pour les installer. Et au surplus, le coût matière est dérisoire.

En variante, ladite au moins une butée axiale peut être rapportée sur le radiateur ou sur le support. Dans ce cas on ne modifie pas les moules de fabrication de ces différents éléments, et la butée axiale est par exemple collée ou fixée par tout autre moyen sur le radiateur ou bien sur le support.

Avantageusement, chaque bras du support comporte une butée axiale. On obtient alors une rigidité maximum du support.

En particulier, le support peut comporter une partie centrale prévue pour recevoir le motoventilateur, et quatre bras partant de cette partie centrale pour venir se fixer aux quatre coins du radiateur, qui comportent chacun près de leur point de fixation une butée axiale.

L'invention a aussi pour objet, selon un autre aspect, un véhicule automobile équipé d'un moteur thermique refroidi par un radiateur, comportant un ensemble de refroidissement réalisé suivant l'une quelconque des revendications 1-8.

Selon encore un autre aspect, la présente invention propose un véhicule automobile équipé d'un moteur électrique refroidi par un radiateur et comportant un ensemble de refroidissement réalisé suivant l'une quelconque des revendications 1-8.

L'invention sera mieux comprise et d'autres caractéristiques et avantages apparaîtront plus clairement à la lecture de la description ci-après donnée à titre d'exemple, en référence aux dessins annexés dans lesquels :
- la figure 1 est une vue arrière d'un ensemble de refroidissement selon l'art antérieur ;
- les figures 2, 3, 4 et 5 sont des vues des fixations respectivement supérieure gauche, supérieure droite, inférieure gauche et inférieure droite, du support du motoventilateur de cet ensemble ;
- la figure 6A est une vue en perspective d'un support d'un ensemble de refroidissement selon l'invention ;
- la figure 6B est une vue de détail du support représenté sur la figure 6A, selon une variante de réalisation ;
- la figure 7 est une vue de dessus de ce support fixé sur le radiateur ;
- les figures 8 et 9 sont des vues de détail des fixations de ce support, respectivement droites et gauches ;
- la figure 10 est une vue arrière d'un radiateur d'un ensemble de refroidissement suivant une variante ;
- la figure 11 est une vue de dessus de ce radiateur équipé de son support ; et
- les figures 12 et 13 sont des vues de détail des fixations de ce support, respectivement droites et gauches.

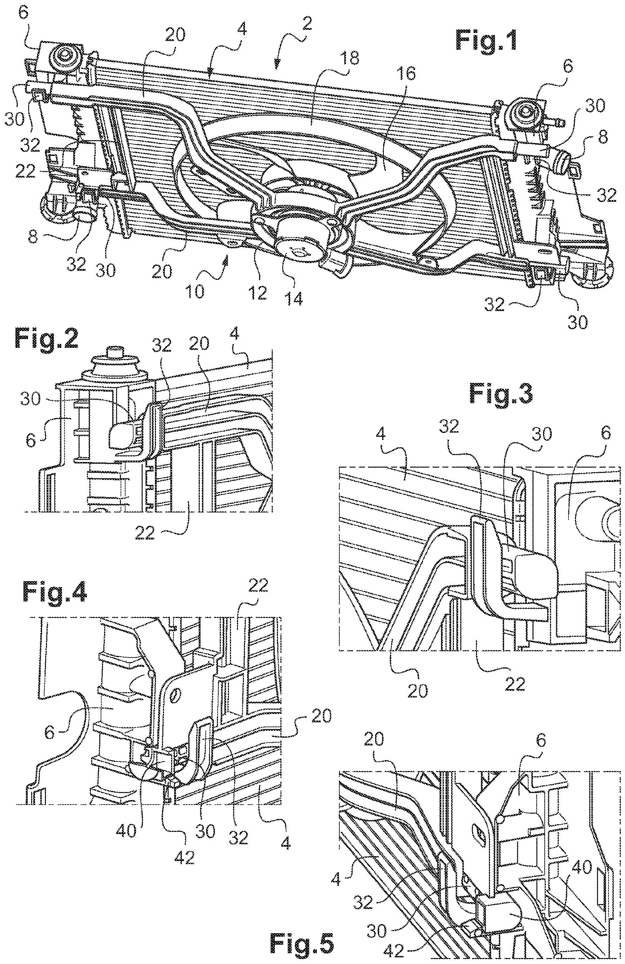

Les figures 1 et 2 présentent un radiateur 2 comportant un faisceau central de tubes horizontaux 4, et présentant deux côtés latéraux opposés. Il est équipé de deux boîtes à eau verticales 6 fixées respectivement sur ces deux côtés latéraux opposés et qui assurent la communication du fluide vers une entrée et une sortie 8 de ce radiateur 2.

Chaque boîte à eau 6 réalisée par moulage d'une matière plastique, comporte de manière intégrée dans ce moulage des moyens de montage sur la caisse du véhicule, les tubes d'entrée et de sortie du fluide 8, et à chaque extrémité supérieure et inférieure de sa face arrière, un crochet 32 permettant la fixation d'un support 10 d'un motoventilateur.

Le support de motoventilateur 10 comporte une partie centrale circulaire 12 recevant à l'intérieur le moteur électrique 14 du motoventilateur, qui est reliée par quatre bras 20 disposés sensiblement en diagonale, aux quatre coins du radiateur 2 comprenant chacun le crochet de fixation 32. De chaque côté du support 10, une liaison verticale 22 relie les deux bras 20 entre eux, entre la boîte à eau 6 et la partie centrale 12, un peu avant la boîte à eau 6.

Une collerette axiale 18 entourant l'hélice 16 du motoventilateur, est fixée sur la face avant de chacun des quatre bras 20 du support 10.

Les figures 2 et 3 présentent en détail les fixations des deux bras supérieurs 20 du support, qui se terminent chacun par un axe horizontal 30 parallèle au plan du radiateur 2 disposé transversalement dans le véhicule. Chaque axe horizontal 30 est inséré dans son crochet 32 afin d'être calé suivant l'axe longitudinal du véhicule, sans prendre appui en bas de ce crochet pour garder un degré de liberté dans le sens vertical.

Les figures 4 et 5 présentent en détail les fixations des deux bras inférieurs 20 du support, qui se terminent aussi chacun par un axe horizontal 30 inséré dans son crochet 32.

Chaque axe horizontal 30 des bras inférieurs 20 se termine par une collerette d'extrémité 40, qui est calée longitudinalement sur un appui 42 de la boîte à eau 6 pour réaliser le calage dans cette direction, et verticalement sur ce même appui afin de positionner en hauteur le radiateur 2.

On réalise ainsi un montage simple et rapide du support 10 sur le radiateur 2, qui est entièrement isostatique, et n'entraîne pas de contrainte due aux dispersions des dimensions venant de la fabrication, et aux différentes dilatations des composants.

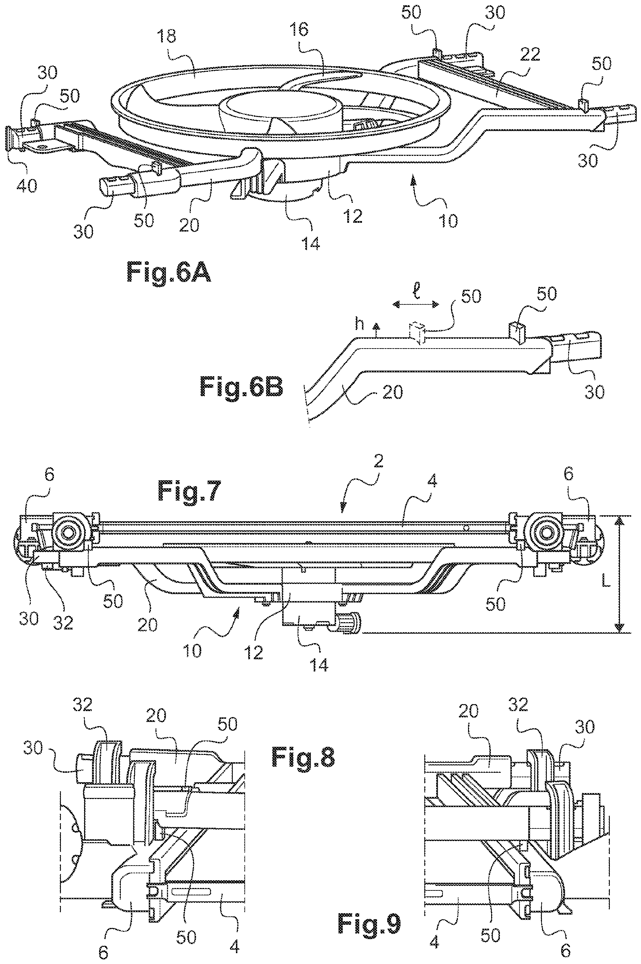

Les figures 6, 7, 8 et 9 présentent un support 10 comportant sur la face avant de chaque bras, un peu avant son axe horizontal 30, et après la liaison verticale 22, une cale 50 qui vient sensiblement en contact avec la face arrière de la boîte à eau 6 correspondante.

On réalise facilement et de manière économique les cales 50 en les intégrant dans le moulage du support 10, ce qui de plus ne nécessite pas de manipulation pour les mettre en place.

On obtient alors un calage axial supplémentaire de chaque bras 20 du support 10, qui se trouvant vers l'intérieur par rapport à son crochet de fixation 32, constitue un point d'appui limitant la flexion de ce bras vers l'avant.

Le motoventilateur 14 est ainsi retenu vers l'avant par les quatre cales 50 agissant sur chacun des bras 20, ce qui empêche un contact de l'hélice 16 sur le faisceau du radiateur 4 lorsque les différents efforts se combinent pour pousser ce motoventilateur vers l'avant.

En outre, la cale 50 que l'on retrouve en détail sur la figure 6B, peut être ajustée selon une direction longitudinale l sur le bras 20 dans une position rapprochée de l'axe horizontal 30 ou bien dans une position éloignée de cet axe horizontal 30 pour tenir compte de l'amplitude de flexion des bras 20. En effet, plus le bras est flexible et plus il est nécessaire d'éloigner la cale 50 de l'axe horizontal 30. Au surplus, il est également possible de faire varier la hauteur h de la cale 50 afin de pouvoir précisément anticiper le fléchissement du bras 20.

Par ailleurs dans certains cas avec la rigidité supplémentaire des bras 20 du support 10, on peut réduire le jeu initialement prévu entre l'hélice 16 et le radiateur 2, et gagner ainsi par exemple de 5 à 10mm sur la longueur axiale L de l'ensemble radiateur et motoventilateur.

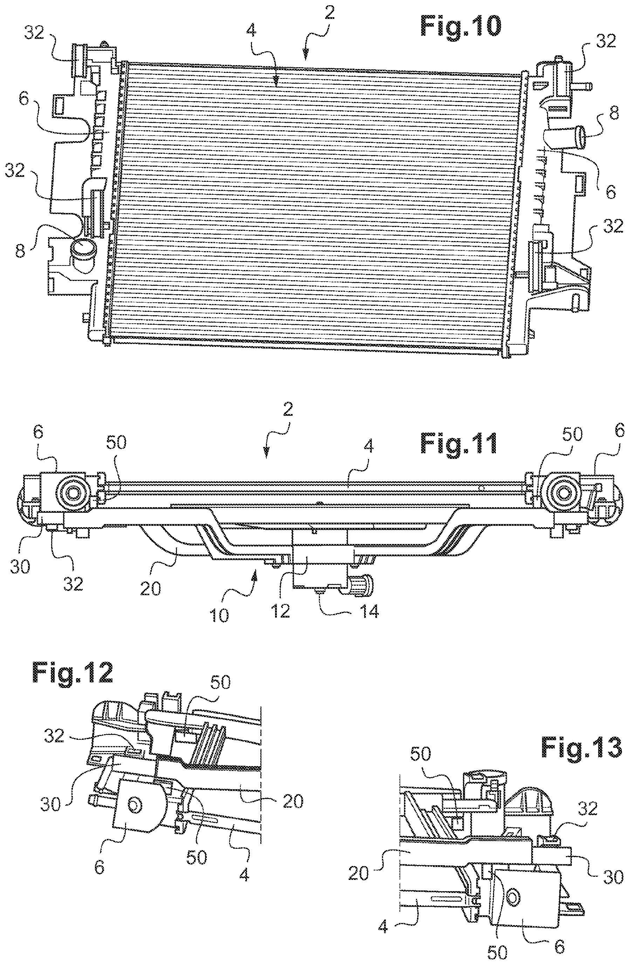

Les figures 10, 11, 12 et 13 présentent en variante des cales 50 disposées dans les mêmes positions, mais intégrées directement dans les boîtes à eau 6 lors du moulage de la matière plastique de ces boîtes.

Dans ce cas suivant le même fonctionnement, chaque cale 50 vient en contact avec la face avant d'un bras 20 pour limiter sa flexion.

D'une manière générale pour les deux variantes présentées ci-dessus, on réalise une modification du moule d'injection du support 10 ou des boîtes à eau 6, pour y ajouter de manière économique les butées 50 en reprenant l'outillage existant.

On peut aussi en complément rapporter des cales 50, par collage par exemple, sur les bras 20 ou les boîtes à eau 6, sans modifier la forme de ces composants. Les cales 50 peuvent également être solidarisées au bras par vissage ou bien encore par clipsage. Par contre dans ce cas il faut prévoir un temps de main-d'oeuvre supplémentaire pour mettre en place ces cales 50.

Ce type de modification est intéressant notamment pour des évolutions de véhicules produits en série, comportant par exemple un changement de l'hélice ou du moteur électrique du motoventilateur en conservant le même support 10, sans avoir à refaire complètement la conception et l'outillage du système de refroidissement.

## Revendications

1. Ensemble de refroidissement de fluide pour un organe fonctionnel à refroidir, comprenant d'une part un radiateur (2) présentant des côtés et des boîtes à eau venant sur lesdits côtés, et d'autre part un support (10) comportant une partie centrale (12) de maintien d'un motoventilateur (14), et des bras (20) s'étendant radialement à partir de ladite partie centrale, lesdits bras présentant des extrémités équipées respectivement de moyen de fixation d'extrémité (30) venant se fixer sur lesdites boîtes à eau (6) ;
**caractérisé en ce qu'**il comporte au moins une butée axiale (50) disposée entre au moins un bras et ledit radiateur (2) pour effectuer un calage axial dudit bras par rapport audit radiateur (2).

2. Ensemble de refroidissement selon la revendication 1, **caractérisé en ce que** ladite au moins une butée axiale (50) est située radialement entre l'extrémité dudit au moins un bras et ladite partie centrale (12).

3. Ensemble de refroidissement selon la revendication 1 ou 2, **caractérisé en ce que** ladite au moins une butée axiale (50) est située au voisinage de ladite extrémité dudit au moins un bras.

4. Ensemble de refroidissement selon l'une quelconque des revendications 1 à 3, **caractérisé en ce que** ladite au moins une butée axiale (50) est intégrée dans le moulage des boîtes à eau (6).

5. Ensemble de refroidissement selon l'une quelconque des revendications 1 à 3, **caractérisé en ce que** ladite au moins une butée axiale (50) est intégrée dans le moulage des bras (20) du support (10).

6. Ensemble de refroidissement selon l'une quelconque des revendications 1 à 3, **caractérisé en ce que** ladite au moins une butée axiale (50) est rapportée sur le radiateur (2) ou sur le support (10).

7. Ensemble de refroidissement selon l'une quelconque des revendications 1 à 6, **caractérisé en ce que** chaque bras (20) du support (10) comporte une butée axiale (50).

8. Ensemble de refroidissement selon la revendication 7, **caractérisé en ce que** le support (10) comporte une partie centrale (12) prévue pour recevoir le motoventilateur (14), et quatre bras (20) s'étendant radialement à partir de ladite partie centrale (12).

9. Véhicule automobile équipé d'un moteur thermique refroidi par un radiateur (2), **caractérisé en ce qu'**il comporte un ensemble de refroidissement réalisé suivant l'une quelconque des revendications 1 à 8.

10. Véhicule automobile équipé d'un moteur électrique refroidi par un radiateur (2), **caractérisé en ce qu'**il comporte un ensemble de refroidissement réalisé suivant l'une quelconque des revendications 1 à 8.

## Patentansprüche

1. Anordnung zur Kühlung von Fluid für ein zu kühlendes Funktionselement, umfassend einerseits einen Kühler (2), der Seiten und Wasserbehälter, die an den Seiten angeordnet sind, aufweist, und andererseits einen Träger (10), der einen mittleren Bereich (12) zum Halten eines Motorgebläses (14), und Arme (20), die sich radial von dem mittleren Bereich erstrecken, aufweist, wobei die Arme Enden aufweisen, die jeweils mit einem Mittel zur Befestigung eines Endes (30) versehen sind, die an den Wasserbehältern (6) befestigt sind;
**dadurch gekennzeichnet, dass** sie mindestens einen Axialanschlag (50) aufweist, der zwischen mindestens einem Arm und dem Kühler (2) angeordnet ist, um eine axiale Abstützung des Arms bezogen auf den Kühler (2) vorzunehmen.

2. Anordnung zur Kühlung nach Anspruch 1, **dadurch gekennzeichnet, dass** der mindestens eine Axialanschlag (50) radial zwischen dem Ende des mindestens einen Arms und dem mittleren Bereich (12) gelegen ist.

3. Anordnung zur Kühlung nach Anspruch 1 oder 2, **dadurch gekennzeichnet, dass** der mindestens eine Axialanschlag (50) angrenzend an das Ende des mindestens einen Arms gelegen ist.

4. Anordnung zur Kühlung nach einem der Ansprüche 1 bis 3, **dadurch gekennzeichnet, dass** der mindestens eine Axialanschlag (50) in die Formung der Wasserbehälter (6) integriert ist.

5. Anordnung zur Kühlung nach einem der Ansprüche 1 bis 3, **dadurch gekennzeichnet, dass** der mindestens eine Axialanschlag (50) in die Formung der Arme (20) des Trägers (10) integriert ist.

6. Anordnung zur Kühlung nach einem der Ansprüche 1 bis 3, **dadurch gekennzeichnet, dass** der mindestens eine Axialanschlag (50) auf den Kühler (2) oder den Träger (10) aufgesetzt ist.

7. Anordnung zur Kühlung nach einem der Ansprüche 1 bis 6, **dadurch gekennzeichnet, dass** jeder Arm (20) des Trägers (10) einen Axialanschlag (50) aufweist.

8. Anordnung zur Kühlung nach Anspruch 7, **dadurch gekennzeichnet, dass** der Träger (10) einen mittleren Bereich (12), der zur Aufnahme des Motorgebläses (14) vorgesehen ist, und vier Arme (20), die sich radial von dem mittleren Bereich (12) erstrecken, aufweist.

9. Kraftfahrzeug, das mit einem Verbrennungsmotor ausgerüstet ist, der von einem Kühler (2) gekühlt wird, **dadurch gekennzeichnet, dass** es eine Anordnung zur Kühlung aufweist, die nach einem der Ansprüche 1 bis 8 ausgeführt ist.

10. Kraftfahrzeug, das mit einem Elektromotor ausgerüstet ist, der von einem Kühler (2) gekühlt wird, **dadurch gekennzeichnet, dass** es eine Anordnung zur Kühlung aufweist, die nach einem der Ansprüche 1 bis 8 ausgeführt ist.

## Claims

1. Fluid cooling assembly for a functional member to be cooled, comprising firstly a radiator (2) with sides and header boxes on said sides, and secondly a support (10) comprising a central portion (12) for holding a motor-driven fan (14), and arms (20) extending radially from said central portion, the ends of said arms being fitted with respective end attachment means (30) that are attached to said header boxes (6),
**characterized in that** it includes at least one axial stop (50) arranged between at least one arm and said radiator (2) to create an axial chock between said arm and said radiator (2).

2. Cooling assembly according to Claim 1, **characterized in that** said at least one axial stop (50) is positioned radially between the end of said at least one arm and said central portion (12).

3. Cooling assembly according to Claim 1 or claim 2, **characterized in that** said at least one axial stop (50) is positioned close to said end of said at least one arm.

4. Cooling assembly according to any one of Claims 1 to 3, **characterized in that** said at least one axial stop (50) is integrated into the moulding of the header boxes (6) .

5. Cooling assembly according to any one of Claims 1 to 3, **characterized in that** said at least one axial stop (50) is integrated into the moulding of the arms (20) of the support (10).

6. Cooling assembly according to any one of Claims 1 to 3, **characterized in that** said at least one axial stop (50) is attached to the radiator (2) or to the support (10) .

7. Cooling assembly according to any one of Claims 1 to 6, **characterized in that** each arm (20) of the support (10) has an axial stop (50).

8. Cooling assembly according to Claim 7, **characterized in that** the support (10) has a central portion (12) designed to receive the motor-driven fan (14), and four arms (20) extending radially from said central portion (12) .

9. Motor vehicle fitted with a combustion engine cooled by a radiator (2), **characterized in that** it includes a cooling assembly made according to any one of Claims 1 to 8.

10. Motor vehicle fitted with an electric motor cooled by a radiator (2), **characterized in that** it includes a cooling assembly made according to any one of Claims 1 to 8.
